# EUROPEAN PATENT APPLICATION

(11) **EP 4 813 743 A1**
(43) Date of publication of application: **30.09.2026**
(21) Application number: 25166359.7
(22) Date of filing: 26.03.2025
(51) Int. Cl.: B60P 1/54

(54) **REAR DEMOUNTABLE CONSOLE, VEHICLE-SIDE MOUNTING STRUCTURE, SYSTEM, AND METHOD FOR COUPLING A REAR DEMOUNTABLE CONSOLE TO A VEHICLE**

(71) Applicant: Palfinger AG, 5101 Bergheim bei Salzburg (AT)
(72) Inventor: BURGSTALLER, Gerhard, 5203 Köstendorf-Salzburg (AT); HAUBENHOFER, Martin, 5203 Köstendorf-Salzburg (AT); THUM, Daniel, 5061 Elsbethen-Glasenbach (AT)
(74) Representative: 2SPL Patentanwälte PartG mbB

(57) **Abstract**

The present disclosure relates to a rear demountable console (1), a vehicle-side mounting structure (4), a system, and to a method for coupling a rear demountable console to a vehicle. The rear demountable console (1) comprises a carrier structure (2) for mounting a lifting device, and a console-side mounting structure (3) for mounting the rear demountable console to a vehicle-side mounting structure (4) fastened to the vehicle, wherein the console-side mounting structure is arranged at the carrier structure and comprises a locking mechanism (5) with two static upper hooks (6a) and two movable lower hooks (6b), wherein the upper hooks are arranged to be hooked to upper receptacles (7a) of the vehicle-side mounting structure and the lower hooks are arranged to be hooked, in an extended position, to lower receptacles (7b) of the vehicle-side mounting structure, wherein the locking mechanism comprises at least one hydraulic cylinder (11) configured to rotate the lower hooks around a pivot pin, to move the lower hooks between a retracted position and the extended position.

## Description

### Field

The present disclosure relates to a rear demountable console, a vehicle-side mounting structure, a system, and to a method for coupling a rear demountable console to a vehicle.

### Background

It is common practice to mount lifting cranes on consoles and attach these consoles to the rear of a truck. A vehicle-side structure is usually provided at the rear end of the chassis, to which the console is often bolted or screwed. As these consoles are removably mounted to the rear of a vehicle (e.g., of a track), they are often denoted rear demountable bracket or rear demountable console.

A rear demountable bracket is thus a removable extension of the subframe of the vehicle, on which the crane can be mounted. The bracket can be easily attached to and detached from the vehicle. It is designed to host and support the performance of several different crane models. Most commonly, tipper vehicles are equipped with rear demountable brackets. This is due to the bracket's ability to enhance the vehicle's functionality. In particular, the rear demountable bracket widens the multifunctional purpose of the vehicle, making it more versatile for various tasks. For instance, if the operator requires a high load capacity and/or the tipper function for their task, the rear demountable bracket can be removed. Conversely, if a crane operation is needed, the rear demountable bracket can be quickly picked up and connected to the vehicle. This adaptability makes it particularly useful for small businesses with few trucks.

To securely host an implement, such as a lifting crane, a rear demountable bracket requires a strong connection with the carrier vehicle. While such a strong connection can be provided by manually bolting the rear demountable bracket to the vehicle, this process may take a lot of time or require multiple operators.

There may be a desire to provide an improved mechanism for mounting a rear demountable bracket to a vehicle.

### Summary

This desire is addressed by the subject matter of the independent claims.

Various examples of the present disclosure are based on the finding, that the process of mounting a rear demountable console (rear demountable bracket) to a vehicle can be facilitated or sped up by using hooks that are hydraulically rotated around a pivot pin. In the proposed mechanism, once static upper hooks of a console-side mounting structure are placed above corresponding upper receptacles of a vehicle-side mounting structure, coupling of the rear demountable structure to the vehicle-side mounting structure is largely automatic, as the rear demountable structure can be lowered onto the receptacles using hydraulic support legs of the lifting device mounted on the console until the static upper hooks rest on the upper receptacles, and lower hooks can be engaged hydraulically from below to lower receptacles of the vehicle-side mounting structure to complete at least the mechanical portion of the mounting process. This facilitates and speeds up the mounting process compared to the labor-intensive mounting processes used in other cases.

Some aspects of the present disclosure relate to a rear demountable console for mounting a lifting device to a vehicle. The rear demountable console comprises a carrier structure for mounting a lifting device. The rear demountable console comprises a console-side mounting structure for mounting the rear demountable console to a vehicle-side mounting structure fastened to the vehicle. The console-side mounting structure is arranged at the carrier structure. The console-side mounting structure comprises a locking mechanism with two static upper hooks and two movable lower hooks. The upper hooks are arranged to be hooked to upper receptacles of the vehicle-side mounting structure. The lower hooks are arranged to hook, in an extended position, to lower receptacles of the vehicle-side mounting structure. The locking mechanism comprises at least one hydraulic cylinder configured to rotate the lower hooks around a pivot pin, to move the lower hooks between a retracted position and the extended position. This way, the rear demountable console can quickly and with little manual effort be coupled with the vehicle-side mounting structure.

In general, the mounting process starts with the upper hooks being placed above the upper receptacles of the vehicle-side mounting structure. Then, the rear demountable console is lowered onto the upper receptacles. To account for scenarios, in which there is no perfect alignment between the upper receptacles and the static upper hooks, the shapes of the upper hooks and the upper receptacles may be used to provide automatic alignment between the rear demountable console and the vehicle-side mounting structure as the rear demountable console is lowered onto the vehicle-side mounting structure. For example, the upper hooks and/or the lower hooks may be shaped to be hooked to cylindrical studs of the vehicle-side mounting structure. In addition to providing automatic alignment, cylindrical studs are less prone to jamming than other shapes and are themselves less prone to deformation.

To avoid scenarios in which the lower hooks disengage due to problems in the hydraulic system, additional safety mechanisms may be included. For example, the locking mechanism may comprise at least one self-locking bolt configured to impede movement of the at least one hydraulic cylinder and/or the lower hooks while in a locked position. The self-locking bolt can stop the lower hooks from moving in case the hydraulic system fails or in case of accidental disengagement of the lower hooks, which improves the safety of the coupling between the rear demountable console and the vehicle-side mounting structure. By using a self-locking bolt, additional safety is provided without requiring manual actions of the operator.

For example, the one or more self-locking bolts may be configured to automatically engage in the locked position upon the lower hooks reaching the extended position. By automatically engaging the bolts once the mechanical coupling is completed, additional safety is provided without requiring manual of by the operator.

Safety can be further improved by adding one or more sensors to determine the position of the lower hooks (e.g., directly or via the at least one safety bolt). In other words, the locking mechanism may comprise at least one sensor for determining a position of the lower hooks.

In particular, the at least one sensor may be configured to determine a position of at least one bolt being configured to impede movement of the at least one hydraulic cylinder and/or the lower hooks while in a locked position. To engage the safety bolt(s), the lower hooks may be required to be engaged, too, so that the sensor can be used to ascertain that the rear demountable console is mechanically coupled to the vehicle-side mounting structure.

There are other safety features that can be used to guard against malfunction of the hydraulic system. For example, the locking mechanism may comprise at least one load holding valve being hydraulically connected to the at least one hydraulic cylinder. This way, hydraulic pressure at the at least one hydraulic cylinder may be maintained even if the hydraulic pressure in the overall hydraulic system is lost.

In some other rear demountable consoles, a minimalist approach is used, in which the rear demountable console is exclusively used to mount a lifting device to a truck. Other components are then mounted directly to the vehicle, which makes unmounting and mounting the rear demountable console harder and creates additional labor, as the additional components may also be mounted or demounted (coupled or uncoupled) when the main rear demountable console is mounted or demounted. Moreover, this approach leaves little room for modifications or improvements of the rear demountable console. In contrast, in various examples of the proposed concept, the rear demountable console behaves as a host console to the other components, such as an underride protection structure or trailer hitch. In other words, the rear demountable console may comprise a trailer hitch or mounting structure for a trailer hitch arranged at the carrier structure. Additionally, or alternatively, the rear demountable console may comprise an underride protection structure or mounting structure for an underride protection structure arranged at the carrier structure. For example, the rear demountable console may behave as a quasi-monolithic structure that can be used to host various other components in addition to the lifting device. This way, mounting and demounting of the rear demountable console and additional components is facilitated, and modifications or improvements to the rear demountable console are facilitated.

Some aspects of the present disclosure relate to a vehicle-side mounting structure for mounting the rear demountable console to a vehicle. The vehicle-side mounting structure comprises receptacles for receiving static upper hooks and hydraulically movable lower hooks of a locking mechanism of a console-side mounting structure of the rear demountable console. The vehicle-side mounting structure comprises a fastening structure for fastening the vehicle-side mounting structure to a frame of the vehicle. By providing the vehicle-side mounting structure with the receptacles for receiving static upper hooks and hydraulically movable lower hooks, the rear demountable console can quickly and with little manual effort be coupled with the vehicle-side mounting structure.

In various examples of the present disclosure, the receptacles are cylindrical studs. In addition to providing automatic alignment, cylindrical studs are less prone to jamming than other shapes and are themselves less prone to deformation than many other shapes.

To simplify fastening the vehicle-side mounting structure to the vehicle, the vehicle-side mounting structure may comprise two parts that are to be mounted on respective lateral sides of the vehicle. In other words, the vehicle-side mounting structure may comprise a first partial mounting structure to be fastened to a first lateral side of the frame of the vehicle and a second partial mounting structure to be fastened to a second lateral side of the frame of the vehicle being opposite the first lateral side of the vehicle. In particular, the partial mounting structures may be arranged to be fastened laterally to respective sides of the frame of the vehicle.

This way, the respective parts of the vehicle-side mounting structure can be fastened to the vehicle frame from one side only, which facilitates the fastening process.

To provide sufficient stability for the rear demountable console and the lifting device, care may be taken to take into account vertical and lateral forces. Therefore, the partial mounting structures may be substantially L-shaped, to provide stability both in the vertical and lateral directions. In other words, the partial mounting structures may comprise a first portion having a lateral extent that is larger than a vertical extent of the first portion and a second portion having a lateral extent that is smaller than a vertical extent of the second portion.

For example, the fastening structure may have a lateral width of at least 80 centimeters. This provides additional lateral stability for a trailer hitch of the rear demountable console.

Rear demountable consoles are often mounted to tipper trucks. To provide sufficient stability without impeding the tipping functionality of tipping trucks, a recess may be included in the fastening structure. In other words, the fastening structure may comprise a recess for accommodating a tipping mechanism of the vehicle.

Another aspect of the present disclosure relates to a system comprising the aforementioned rear demountable console and vehicle-side mounting structure.

Another aspect of the present disclosure relates to a system comprising the aforementioned rear demountable console and a lifting device mounted on the rear demountable console.

In some examples, the system may comprise two or more hydraulic support legs, configured to raise and lower the rear demountable console during coupling of the rear demountable console to the vehicle-side mounting structure. Using the two or more hydraulic support legs, the static upper hooks of the rear demountable console can be lowered onto the upper receptacles of the vehicle-side mounting structure.

Some aspects of the present disclosure relate to a method for coupling a rear demountable console to a vehicle. The method comprises arranging a console-side mounting structure of the rear demountable console proximate to a vehicle-side mounting structure fastened to the vehicle, such that static upper hooks of the console-side mounting structure are located above upper receptacles of the vehicle-side mounting structure. The method comprises lowering the static upper hooks of the console-side mounting structure onto the upper receptacles. The method comprises rotating, using at least one hydraulic cylinder, lower hooks of the console-side mounting structure into an extended position, such that the lower hooks clamp, from below, to lower receptacles of the vehicle-side mounting structure. This way, the rear demountable console can quickly and with little manual effort be coupled with the vehicle-side mounting structure.

For example, the method may comprise engaging, by at least one self-locking bolt, into a locked position impeding movement of the at least one hydraulic cylinder and/or the lower hooks when the lower hooks are in the extended position. The self-locking bolt can stop the lower hooks from moving in case the hydraulic system fails or in case of accidental disengagement of the lower hooks, which improves the safety of the coupling between the rear demountable console and the vehicle-side mounting structure. By using a self-locking bolt, additional safety is provided without requiring manual actions of the operator.

In various examples, the method comprises connecting a console-side hydraulic system to a hydraulic system of the vehicle. For example, the act of rotating, using the at least one hydraulic cylinder, the lower hooks of the console-side mounting structure into the extended position may be performed using a hydraulic force that is powered by the hydraulic system of the vehicle. This way, the rear demountable console does not require a separate hydraulic pump, facilitating construction of the rear demountable console.

The hydraulic system of the vehicle may also be used to raise and/or lower the rear demountable console into place. For example, the act of lowering the console-side mounting structure onto the upper receptacles may be performed using hydraulic support legs of the rear demountable console or of a lifting device mounted on the rear demountable console, with the hydraulic support legs being powered by the hydraulic system of the vehicle. This way, the rear demountable console can be lowered onto or raised from the receptacles of the vehicle-side mounting structure without requiring manual effort.

In general, not only the hydraulic system, but also the electrical system of the vehicle may be used for operating the rear demountable console. Moreover, the rear demountable console may be controlled from/by a control system of the vehicle or a control system mounted to the vehicle. Therefore, the rear demountable console and the vehicle may be electrically connected and a control connection may be established. In other words, the method may comprise at least one of connecting a console-side electrical system to an electrical system of the vehicle and connecting console-side control circuitry to a control system of the vehicle. For example, the console-side electrical system may be configured to provide electrical power for a lifting device mounted on the rear demountable console. The control circuitry may be configured to control operation of the at least one hydraulic cylinder, and/or the control circuitry may be configured to interface with a lifting device mounted on the rear demountable console.

### Brief description of the Figures

Some examples of apparatuses and/or methods will be described in the following by way of example only, and with reference to the accompanying figures, in which
- Fig. 1: shows an isometric view of a rear demountable console mounted to a vehicle-side mounting structure;
- Fig. 2: shows a view of a rear demountable console from behind;
- Fig. 3: shows another isometric view of a rear demountable console;
- Fig. 4: shows a side view of a rear demountable console mounted to a vehicle-side mounting structure;
- Fig. 5a: shows a side view of a console-side mounting structure of a rear demountable console mounted to a vehicle-side mounting structure;
- Fig. 5b: shows a top view of a console-side mounting structure of a rear demountable console mounted to a vehicle-side mounting structure;
- Fig. 6: shows an isometric of a console-side mounting structure of a rear demountable console mounted to a vehicle-side mounting structure;
- Fig. 7: shows an isometric view of two partial vehicle-side mounting structures;
- Fig. 8: shows a side view of a rear demountable console mounted to a truck;
- Fig. 9a-9d: show views of a rear demountable console being unmounted from or mounted to a truck;
- Fig. 9e: shows a flow chart of a method for coupling a rear demountable console to a vehicle;
- Fig. 9f: shows a flow chart of a method for uncoupling a read-demountable console from a vehicle;
- Fig. 10a: shows a system diagram of an electrical side of a system; and
- Fig. 10b: shows a system diagram of a mechanical/hydraulic side of a system and of a pneumatic side of the system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

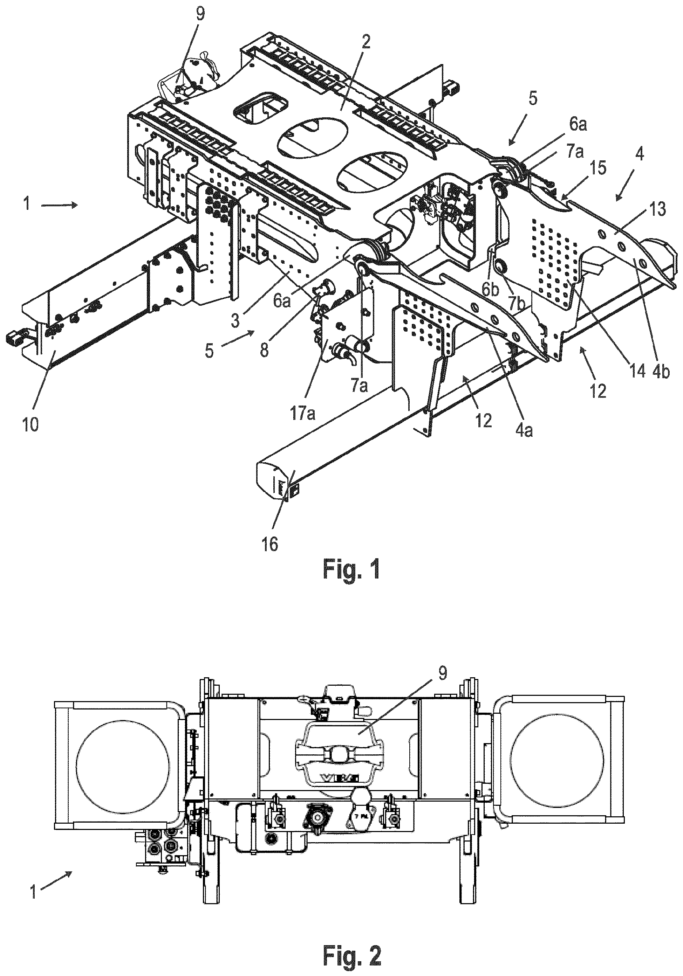

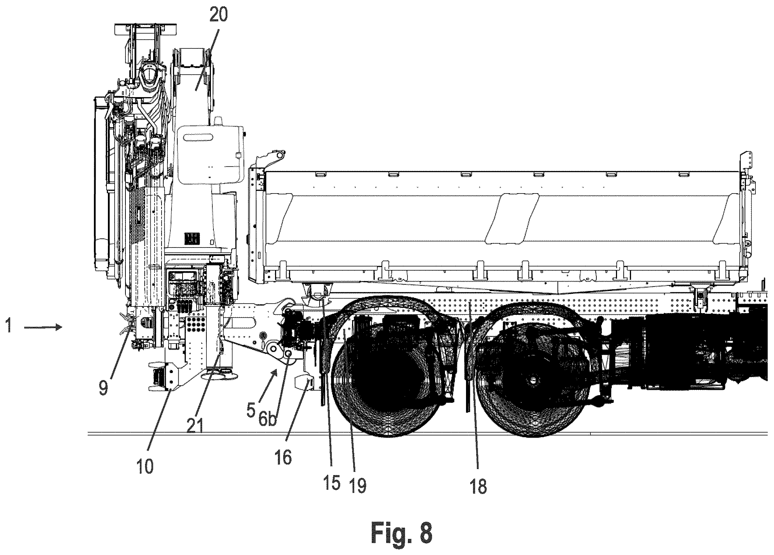

Fig. 1 shows an isometric view of an example of a rear demountable console 1 for mounting a lifting device 20 (shown in Fig. 8) to a vehicle, such as a land vehicle (e.g., wheeled, tracked or railed, for example, a truck, a lorry or a crawler) or a watercraft (e.g., a ship, a boat or a barge). The rear demountable console comprises a carrier structure 2 for mounting the lifting device 20. In particular, the carrier structure 2 may be suitable for mounting a crane, such as a loader crane, or an elevating work platform (e.g., a crane with a lifting platform). The lifting device may be a knuckle boom crane or a stiff boom crane. Cranes having only one boom may also be called stiff boom cranes since they do not exhibit multiple booms that can change their orientation with respect to each other. In the event of cranes having multiple booms, a knuckle can be used to connect the different booms to one another so as to enable them to change their relative orientation, by bending about an axis defined by the knuckle. Cranes having at least two booms connected by a knuckle or hinge offer an additional degree of freedom as compared to stiff boom cranes and may be called knuckle-boom cranes. The booms can be connected by hydraulic cylinders across the knuckle to cause the rotation.

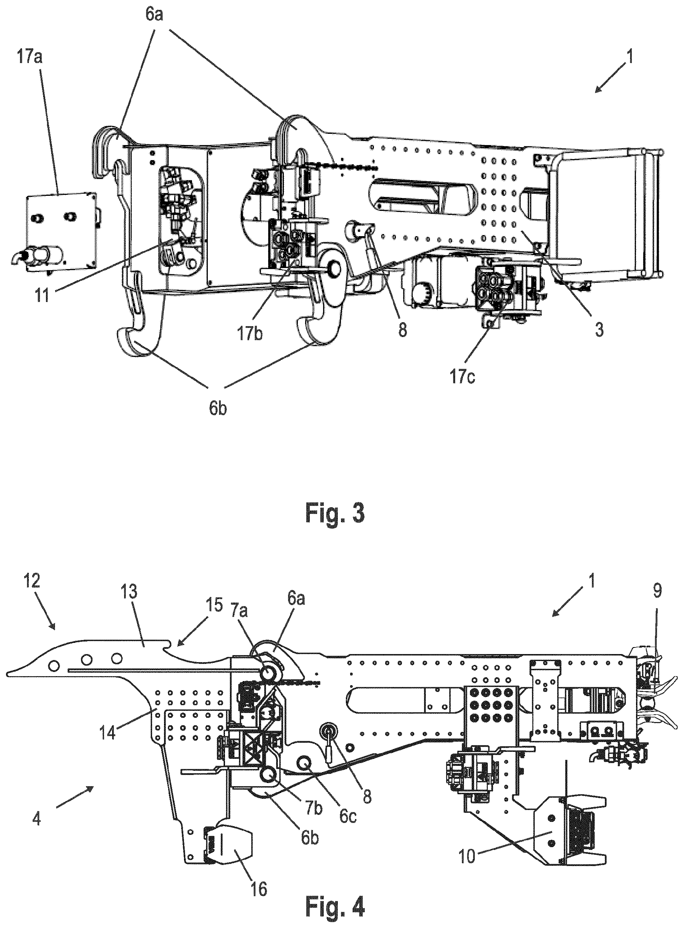

The rear demountable console 1 further comprises a console-side mounting structure 3 for mounting the rear demountable console to a vehicle-side mounting structure 4 fastened to the vehicle. In Fig. 1, the console-side mounting structure 3 is mounted to the vehicle-side mounting structure 4. The console-side mounting structure 3 is arranged at the carrier structure 2. In particular, the carrier structure 2 may be mounted on top of the console-side mounting structure, or the console-side mounting structure 3 may be a component of the carrier structure 2 (or vice versa). In the example of Fig. 3, the console-side mounting structure 3 is a component of the carrier structure 2 that faces towards the vehicle-side mounting structure 4. For example, the carrier structure 2, or more generally the rear demountable console 1 may be suitable for carrying a lifting device of up to 40 metric tons (or up to 35 metric tons, or up to 30 metric tons). For example, the carrier structure 2, or more generally the rear demountable console 1 may be suitable for carrying a weight (i.e., the lifting device) of at least 10 metric tons (or at least 15 metric tons, or at least 20 metric tons, or at least 25 metric tons, or at least 30 metric tons).

The proposed rear demountable console differs from similar structures in its locking mechanism, which enables it to open and close the bracket hydraulically. In particular, the rear demountable console 1 includes a locking mechanism 5 with two static upper hooks 6a and two movable lower hooks 6b. The upper hooks are static and arranged to be hooked to upper receptacles 7a of the vehicle-side mounting structure. The lower hooks are movable and arranged to be hooked, in an extended position, to lower receptacles 7b of the vehicle-side mounting structure. Accordingly, the vehicle-side mounting structure comprises upper receptacles 7a for receiving the static upper hook 6a and lower receptacles 7b for receiving the movable lower hooks 6b of the locking mechanism 5 of the console-side mounting structure 3.

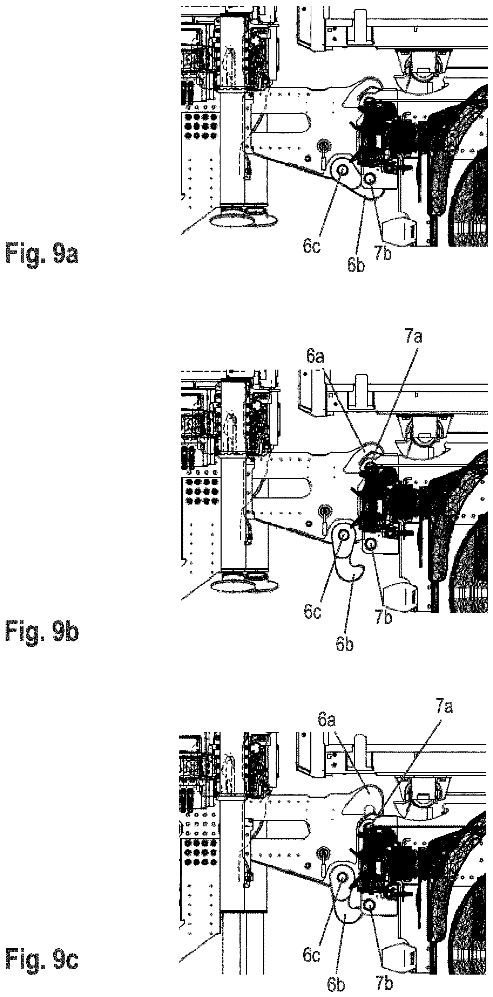

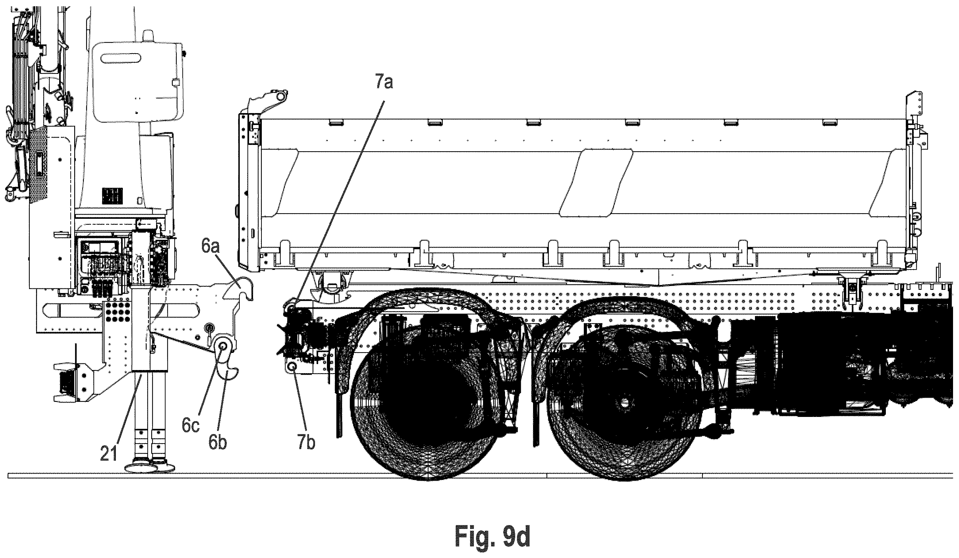

In the proposed concept, the lower hooks are hydraulically driven, making the locking mechanism hydraulically controlled. Thus, the (hydraulic) locking mechanism comprises at least one hydraulic cylinder 11 (shown in Fig. 3) that is configured to rotate the lower hooks 6b around a pivot pin 6c (shown in Fig. 4), to move the lower hooks 6b between the retracted position and the extended position. The hydraulic locking cylinder thus opens and closes the lower hooks. For example, in Figs. 1, 4, 5a, 6, 8, and 9a, the lower hooks 6b are in the extended position. In the extended position, the lower hooks 6b are pointed towards the vehicle-side mounting structure 4 and are configured to clamp to the lower receptacles. In Figs. 3, 9b, 9c and 9d, the lower hooks 6b are in the retracted position. In the retracted position, the lower hooks 6b point towards the ground.

To secure the locking mechanism, some safety mechanisms may be implemented. For example, the lower hooks 6b may be secured by bolts via a hidden console. In the examples shown in Figs. 1 to 10b, security bolts 8 (on both sides) are used to secure the locking mechanism 5. In other words, the locking mechanism may comprise at least one bolt 8 configured to impede movement of the at least one hydraulic cylinder and/or the lower hooks while in a locked position. In particular, the bolts 8 shown in Figs. 1a to 8 are self-locking bolts 8 that are configured to automatically engage in the locked position upon the lower hooks reaching the extended position. In other words, once the lower hooks 6b are rotated into the extended position to clamp to the lower receptacles 7b from below, the bolts 8 automatically engage and lock the movement of the locking mechanism. If an operator wishes to disengage the locking mechanism, he or she may need to manually un-lock the bolts 8 to enable moving the lower hooks 6b into the retracted position. Thus, the self-locking bolts 8 are manually opened, and closed by snapping into the secure position. In Fig. 3, the locked position of the security bolts 8 is shown - when the grip of the bolt points downwards, it is locked, when it points upwards, the bolt is unlocked. Due to the slanted shape of the bolt's housing, the bolt can automatically engage (i.e., move from pointing upwards to pointing downwards), but needs to be retracted manually to unlock.

Fig. 3 shows the various components of the locking mechanism 5. Fig. 3 shows another isometric view of the rear demountable console 1 with the console-side mounting structure 3, the static upper hooks 6a, the hydraulically movable lower hooks 6b, the self-locking bolt 8, the hydraulic cylinder 11 (with load holding valve), and interfaces 17a-17c for connecting various systems to the vehicle.

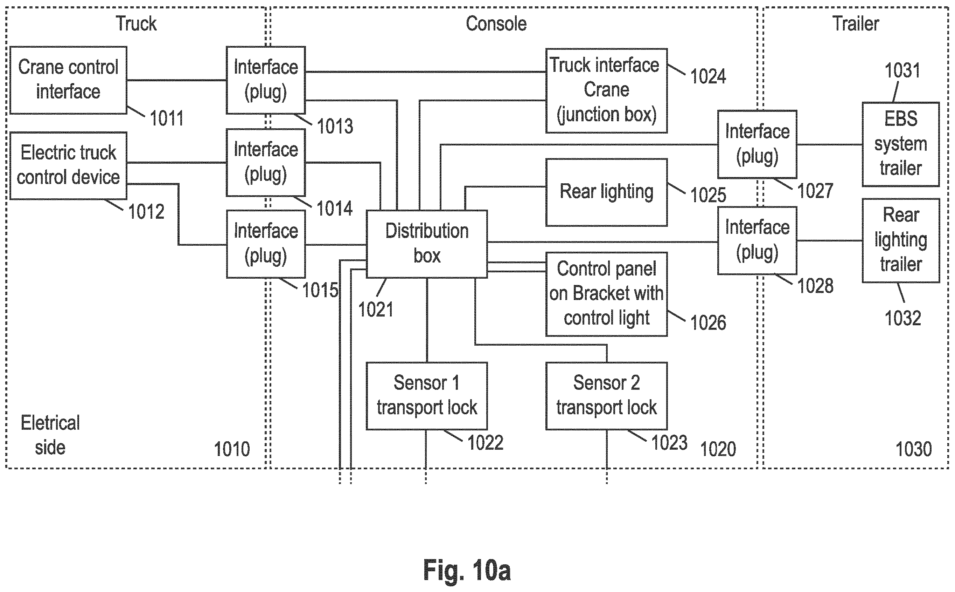

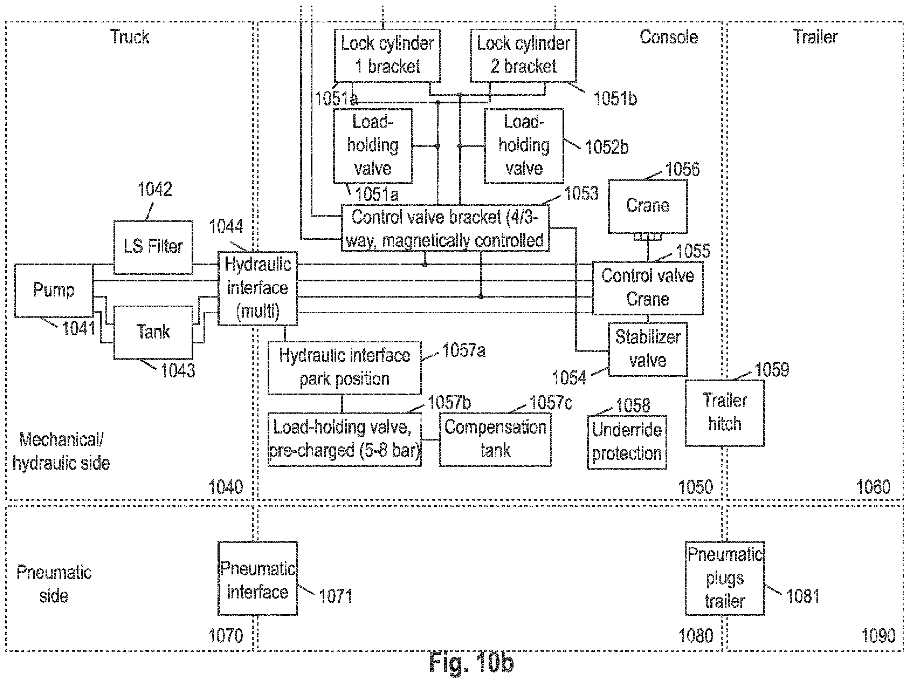

Additional security mechanisms may be implemented with respect to the locking mechanism. For example, load-holding valves may be used to ensure that the lower hooks 6b remain clamped to the lower receptacles 7b if hydraulic pressure is lost. In other words, the locking mechanism may comprise at least one load holding valve (1052a, 1052b in Fig. 10b) being hydraulically connected to the at least one hydraulic cylinder. The load holding valves may be used as double safety measure to avoid unintentional opening of the locking mechanism 5. Additionally, sensors may be used to ensure that the locking mechanism is safely engaged. In other words, the locking mechanism may comprise at least one sensor (e.g., sensors 1022, 1023 in Fig. 10a) for determining the position of the lower hooks. For example, the at least one sensor may comprise a rotary encoder to determine a level of rotation of the lower hooks. Alternatively, the at least one sensor may be used to determine whether the security bolts 8 are engaged. In other words, the at least one sensor may be configured to determine a position of the at least one bolt 8. Thus, the bolts may be monitored electronically if closed (sending a transport security signal to the truck).

In some cases, it may be challenging to position the locking mechanism 5 of the rear demountable console 1 exactly proximate to the vehicle-side mounting structure 4, such that there is no angular offset between the locking mechanism 5 and the vehicle-side mounting structure 4 and such that a concavely shaped inner portion of the upper hooks 6a is positioned exactly above the convexly shaped upper receptacles. To allow for self-alignment between the console-side mounting structure 3 and the vehicle-side mounting structure 4, the hooks and receptacles may be shaped to be self-aligning. For example, in the examples shown in Figs. 1 to 9d, the receptacles 7a, 7b are cylindrical studs, and the upper hooks and/or the lower hooks are shaped to hook to the cylindrical studs 7a, 7b of the vehicle-side mounting structure. In addition, the receptacles 7a, 7b may be flanked by guide flanges to ensure that the hooks 6a, 6b cannot laterally slip from the receptacles 7a, 7b.

In other approaches, the rear demountable console is a mostly bare-bones structure. For example, the rear demountable console, an underride protection and a trailer coupling may, in other approaches, be separate parts, coupled separately to the vehicle, which makes it difficult to modify the structure and perform the coupling and uncoupling. In the proposed concept, the rear demountable console may be a host console to the other parts (such as underride protection structure, trailer hitch). In other words, the carrier structure 2, console-side mounting structure 3 with locking mechanism 5, optional trailer hitch 9, optional underride protection 10 etc. may be (monolithically) coupled to each other, instead of the different components being coupled separately to the vehicle. For example, the proposed rear demountable console 1 hosts the locking mechanism 5, the crane 20, and the accessories, such as an optional trailer hitch 9, an optional underride protection structure 10, optional interfaces 17a, 17b, 17c for power supply, hydraulics, pneumatics and/or control signals etc. Accordingly, the rear demountable console may comprise a trailer hitch 9 arranged at (e.g., bolted to) the carrier structure, and/or the rear demountable console may comprise an underride protection structure 10 arranged at (e.g., bolted to) the carrier structure 2. For example, the underride protection structure 10 may include an integrated light system and may integrate the rear demountable bracket electronics. The trailer hitch 9 and the underride protection structure 10 may be located at the back of the rear demountable structure 1, as shown in Fig. 2, which shows the rear demountable console from the back (without underride protection structure 10).

One benefit of using the rear demountable console 1 as a host console lies in the tight integration of the various components. For example, when including a trailer hitch 9 that is capable for heavy duty trailers, the co-design of the trailer hitch 9 and the rear demountable console 1 means that the rear demountable console 1 can be homologated. Additionally or optionally, when including an underride protection structure 10, the co-design of the underride protection structure 10 and the rear demountable console 1 means that the rear demountable console 1 can be homologated.

The read demountable console 1 may also be used to host various accessories, such as multi fasters, connectors 17a-17c, storage boxes and stabilizer plates. For example, the rear demountable console may comprise prepared holders for accessories, as well as a prepared hole pattern that allows a greater degree of freedom in positioning various accessories.

Moreover, the rear demountable console 1 may have fast coupling for trailer electronics, pneumatics, crane hydraulics and/or crane electronics. In particular, the rear demountable console may comprise a console-side hydraulic system (hydraulic components 1044-1057c of Fig. 10b) that powers the hydraulic cylinder 11 (lock cylinders 1051a, 1051b in Fig. 10b) and the crane (crane 1056 in Fig. 10b). When coupling the rear demountable structure to the vehicle, the console-side hydraulic system may be connected to a hydraulic system (e.g., hydraulic components 1041-1044) of the vehicle. For example, the console-side hydraulic system may be used for the hydraulic cylinder 11, for support legs 21 (shown in Fig. 8) that can be used to raise or lower the rear demountable console, and for operating the crane 20. Moreover, a console-side electrical system and console-side control circuitry (components 1021 to 1028 in Fig. 10a) may be connected to an electrical system and control circuitry of the vehicle (components 1011-1015 in Fig. 10a) and/or to an electrical system and control circuitry of a trailer (components 1031 and 1032 in Fig. 10a). Moreover, the rear demountable console 1 may comprise pneumatic interfaces to the vehicle (interface 1071) and to the trailer interface 1081).

The console-side mounting structure 3 is coupled, using the locking mechanism 5, to the vehicle-side mounting structure 4. Fig. 4 shows a side view of the rear demountable console 1 mounted to the vehicle-side mounting structure 4. In particular, Fig. 4 shows the static upper hooks 6a and the hydraulically movable lower hooks 6b that rotate around the pivot pin 6c. Fig. 4 further shows the self-locking bolt 8. Fig. 4 further shows the vehicle-side mounting structure 4 with the upper receptacles 7a and the lower receptacles 7b. The vehicle-side mounting structure 4 is thus used to host bolts (receptacles) that connect the rear demountable console (crane bracket) to the truck.

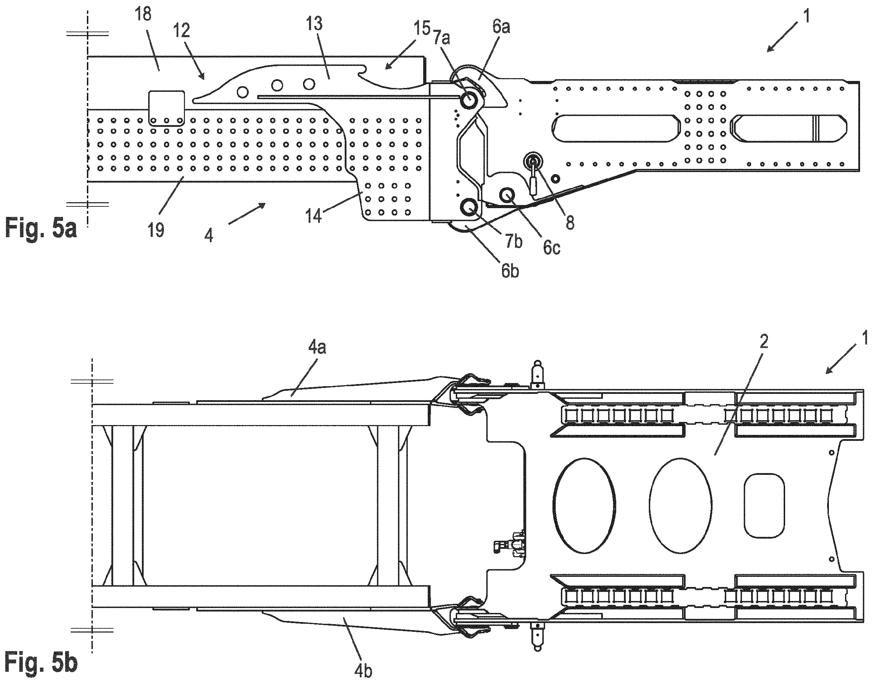

Moreover, the vehicle-side mounting structure 4 comprises a fastening structure 12 for fastening the vehicle-side mounting structure to a frame 18, 19 (shown in Fig. 5a, 6, 8) of the vehicle. Fig. 5a shows a side view of the console-side mounting structure 3 of the rear demountable console 1 mounted to the vehicle-side mounting structure 4 As can be seen well in Fig. 5b that shows a top view of the console-side mounting structure 4, the fastening structure 12 comprises a first portion 13 that extends substantially horizontally and a second portion 14 that extends substantially vertically, thus creating an L-like shape. In other words, the vehicle-side mounting structure 4 may comprise, on each side (e.g., partial mounting structure 4a, 4b), a first portion 13 having a lateral extent being larger than a vertical extent of the first portion and a second portion 14 having a lateral extent being smaller than a vertical extent of the second portion. The first portion 13 of the fastening structure 12 is bolted (with the bolts being welded in place) or screwed to an upper portion 18 of the vehicle subframe and the second portion 14 is bolted or screwed to a lower portion 19 of the truck subframe. These two portions are used to provide lateral and vertical stability. For example, a combination of screws and bolts may be used. As the rear demountable console may be used with a trailer hitch, lateral stability may be emphasized. Thus, the fastening structure may have a lateral width (i.e., along the largest extent of the vehicle) of at least 80 cm. For example, the vehicle-side mounting structure 4 and the rear demountable console may support all heavy-duty trailer variants.

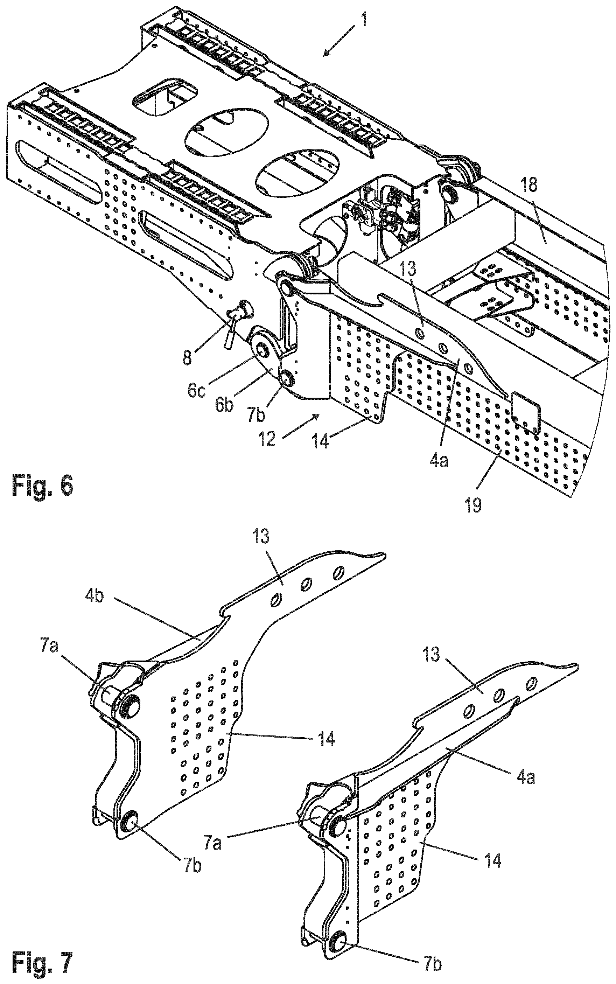

Fig. 6 shows the console-side mounting structure 4 from an isometric perspective to better illustrate how the vehicle-side mounting structure 4 is attached to the vehicle subframe 18, 19. To facilitate mounting the vehicle-side mounting structure 4 to the vehicle, the vehicle-side mounting structure 4 is divided into two partial structures. In the examples shown in Figs. 1 to 9c, the vehicle-side mounting structure 4 is not a monolithic structure, but comprises two partial structures 4a, 4b (see Fig. 7). Fig. 7 shows an isometric view of two partial vehicle-side mounting structures 4a, 4b. As can be seen in Fig. 7, the vehicle-side mounting structure may comprise a first partial mounting structure 4a to be fastened to a first lateral side of the frame 18, 19 of the vehicle and a second partial mounting structure 4b to be fastened to a second lateral side of the frame 18, 19 of the vehicle being opposite the first lateral side of the vehicle. The respective partial mounting structures 4a, 4b are respectively designed to be mounted to the vehicle from only one side of the vehicle. In other words, the partial mounting structures are arranged to be fastened laterally to respective sides of the frame of the vehicle, allowing for easy fixation only on the side plates of the chassis from one side, respectively.

The vehicle-side mounting structure 4 shown in Figs. 1 to 9d is optimized for tipper trucks while maintaining support for other applications and trucks. For this purpose, the fastening structure 12 comprises a recess 15 for accommodating a tipping mechanism of the vehicle.

Additional components may be mounted to the vehicle-side mounting structure 4, such as another underride protection structure 16 that is relevant when the rear demountable console 1 is not mounted to the vehicle-side mounting structure 4.

In Figs. 8 to 9d, the coupling and uncoupling process is illustrated. Fig. 8 shows a side view of the rear demountable console 1 being mounted to a truck (coupled state). In Fig. 8, the upper portion 18 of the subframe and the lower portion 19 of the subframe are shown in context of the vehicle (a tipper truck). In addition, the lifting device 20 (a knuckle boom crane) is shown mounted to the carrier structure of the rear demountable console 1, forming a system. The lifting device comprises one or more hydraulic support legs 21. Alternatively, the hydraulic support legs may be attached to the rear demountable console. Accordingly, the system may comprise one or more hydraulic support legs. The one or more hydraulic support legs 21 are used to stabilize the lifting device 20 during operation. In addition, the one or more hydraulic support legs 21 may be configured to raise and lower the rear demountable console during coupling and/or decoupling of the rear demountable console to the vehicle-side mounting structure.

More details and aspects of the rear demountable console 1 and vehicle-side mounting structure 4 are mentioned in connection with the proposed concept or one or more examples described above or below (e.g., Figs. 9a to 10b). The rear demountable console 1 and vehicle-side mounting structure 4 may comprise one or more additional optional features corresponding to one or more aspects of the proposed concept or one or more examples described above or below.

Fig. 9a to 9d show views of the rear demountable console being unmounted from, or mounted to, a truck. In particular, in Figs. 9a to 9d, the position of the static upper hooks 6a, the position and status (extended or retracted) of the movable lower hooks 6b relative to the upper receptacles 7a and the lower receptacles 7c is illustrated.

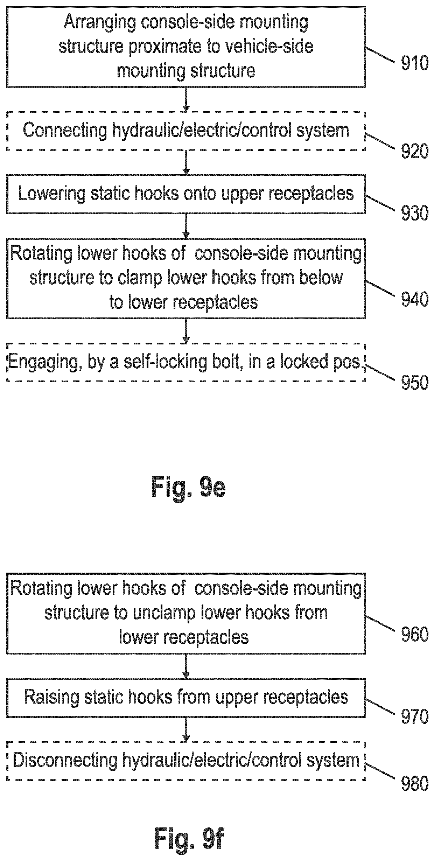

Fig. 9e shows a flow chart of an example of a method for coupling the rear demountable console 1 to a vehicle. The method of Fig. 9e begins with the relative position of the components shown in Fig. 9c. The method comprises arranging (e.g., positioning) 910 the console-side mounting structure of the rear demountable console proximate to a vehicle-side mounting structure fastened to the vehicle, such that the static upper hooks 6a of the console-side mounting structure are located above the upper receptacles 7a of the vehicle-side mounting structure. Optionally, the method of Fig. 9e further comprises connecting 920 a console-side hydraulic system to a hydraulic system of the vehicle. The method comprises lowering 930 the static upper hooks 6a of the console-side mounting structure onto the upper receptacles 7a. The state after lowering the console-side mounting structure is shown in Fig. 9b. For example, the act of lowering the console-side mounting structure onto the upper receptacles may be performed using the hydraulic support legs 21 of the rear demountable console or of a lifting device mounted on the rear demountable console. For example, the hydraulic support legs may be powered by the hydraulic system of the vehicle. The method further comprises rotating 940, using at least one hydraulic cylinder, the lower hooks of the console-side mounting structure into the extended position, such that the lower hooks clamp, from below, to the lower receptacles of the vehicle-side mounting structure. This is shown in Fig. 9a. For example, the act of rotating, using the at least one hydraulic cylinder, the lower hooks of the console-side mounting structure into the extended position may be performed using a hydraulic force that is powered by the hydraulic system of the vehicle. In some examples, the method may further comprise engaging 950, by at least one self-locking bolt, into a locked position impeding movement of the at least one hydraulic cylinder and/or the lower hooks when the lower hooks are in the extended position.

In addition to the hydraulic system, other components and systems of the rear demountable console may also be connected to the vehicle. For example, the method may comprise connecting 920 a console-side electrical system to an electrical system of the vehicle, e.g., to provide electrical power for a lifting device mounted on the rear demountable console and/or to provide power for the lights of the underride protection structure. Additionally, or alternatively, the method may comprise connecting 920 console-side control circuitry to a control system of the vehicle, e.g., to allow operation of the lifting device from the vehicle's control system. For example, the control circuitry may be configured to control operation of the at least one hydraulic cylinder and/or to interface with the lifting device mounted on the rear demountable console.

Fig. 9f shows the reverse process of uncoupling the rear demountable structure from the vehicle. Fig. 9f shows a flow chart of an example of a method for uncoupling a rear demountable console from a vehicle. In this case, the initial state is shown in Fig. 9a (hook closed), where the lower hooks 6b are hooked to the lower receptacles 7b and the upper hooks 6a rest on the upper receptacles 7a. The method comprises rotating 960, using at least one hydraulic cylinder, the lower hooks of the console-side mounting structure into a retracted position, such that the lower hooks unclamp from the lower receptacles of the vehicle-side mounting structure. This state is shown in Fig. 9b (hood opened). The method further comprises raising 970 the static upper hooks 6a of the console-side mounting structure from the upper receptacles 7a, e.g., using the hydraulic support legs 21.This state is shown in Fig. 9c (lift rear demountable console). Optionally, the method further comprises disconnecting 980 the respective system(s) (hydraulic, electric, control).

More details and aspects of the methods are mentioned in connection with the proposed concept or one or more examples described above or below (e.g. Fig. 1 to 8). The methods may comprise one or more additional optional features corresponding to one or more aspects of the proposed concept or one or more examples described above or below.

In Figs. 10a to 10b, the electrical, hydraulic/mechanical and (optional) pneumatic components are shown for an example of the rear demountable console 1, the vehicle and a trailer being attached to the rear demountable console 1. For example, the rear demountable console 1 may comprise one or more of the components shown in boxes 1020 (electric/electronic components), 1050 (mechanical/hydraulic components) and/or 1080 (pneumatic components. Fig. 10a shows a system diagram of an electrical side of a system. Box 1010 shows the electrical side of the vehicle (truck). The truck comprises a crane control interface 1011 and an electric truck control device 1012, which are connected to interfaces (plugs) 1013, 1014, 1015 to which the rear demountable console is connected. Box 1020 shows the electrical side of the rear demountable console, comprising a distribution box 1021, two transport lock sensors 1022, 1023, a truck interface 1024 for the lifting device (crane junction box), rear lighting 1025, a control panel 1026 that is part of the rear demountable console, and interfaces (plugs) towards the trailer. The interfaces 1013, 1014, 1015 are connected to the distribution box, and one of the interfaces (1013) is further connected to the truck interface 1024 for the lifting device. The distribution box 1021 is connected to all other components, and to a control valve 1053 shown in Fig. 10b. Box 1030 shows the electrical side for the trailer, comprising an EBS system 1031 (connected to interface 1027) for the trailer and the rear lighting 1032 (connected to interface 1028) for the trailer.

Fig. 10b shows a system diagram of the mechanical/hydraulic side of the (optional) pneumatic side of the system. Box 1040 shows the mechanical/hydraulic side for the truck, and comprises a pump 1041, a tank 1042, and an (optional) filter 1043 for the LS signal, which are connected to a hydraulic interface 1044 with multiple connections. Box 1050 shows the mechanical/hydraulic side for the rear demountable console, comprising lock cylinders 1051a, 1051b (i.e., the hydraulic cylinders to rotate the lower hooks), which are connected to control valve 1053. Load holding valves 1052a, 1052b are used to secure the lock cylinders. Control valve is connected to hydraulic lines provided by the hydraulic interface 1044. The mechanical/hydraulic side for the rear demountable console further comprises a reference to a control valve 1055 for the crane 1056. However, the control valve 1055 is part of the crane 1056, and both the control valve 1055 and the crane 1056 may be considered separate from the rear demountable console Both control valves 1053, 1055 are connected to the hydraulic lines and to a stabilizer valve 1054. The hydraulic interface 1044 is further connected to a hydraulic interface park position component 1057a, which is connected, via load-holding valve 1057b, to a compensation tank 1057c. The mechanical/hydraulic side for the rear demountable console further comprises the underride protection 1058 (underride protection 10 in Figs. 1 to 9d) and the trailer hitch 1059. Box 1060 shows the mechanical/hydraulic side for the trailer. Box 1070 shows the pneumatic side for the truck, comprising a pneumatic interface 1071. Box 1080 shows the pneumatic side for the rear demountable console, comprising pneumatic plugs 1081 towards the trailer. Box 1090 shows the pneumatic side for the trailer.

More details and aspects of the system are mentioned in connection with the proposed concept or one or more examples described above or below (e.g., Fig. 1 to 9e). The system may comprise one or more additional optional features corresponding to one or more aspects of the proposed concept or one or more examples described above or below.

The proposed concept provides various benefits over other consoles. In other consoles, in many cases, no crane bolt brackets may be prepared, no underride protection may be included, steel parts of the console have to be welded during installation work, trailer coupling might have no homologation and may be installed separately, coupling may be manual (requiring more time), no electrical interface might be provided, no light system may be integrated, and/or require more welding spots on the truck side. In contrast, in various examples of the proposed concept, lock monitoring may be provided, and the proposed console may be prepared for accessories (such as stabilizer plates).

In the following, some examples of the proposed concept are presented:
An example (e.g., example 1) relates to a rear demountable console (1) for mounting a lifting device to a vehicle, the rear demountable console comprising a carrier structure (2) for mounting a lifting device, and a console-side mounting structure (3) for mounting the rear demountable console to a vehicle-side mounting structure (4) fastened to the vehicle, wherein the console-side mounting structure is arranged at the carrier structure and comprises a locking mechanism (5) with two static upper hooks (6a) and two movable lower hooks (6b), wherein the upper hooks are arranged to be hooked to upper receptacles (7a) of the vehicle-side mounting structure and the lower hooks are arranged to be hooked, in an extended position, to lower receptacles (7b) of the vehicle-side mounting structure, wherein the locking mechanism comprises at least one hydraulic cylinder (11) configured to rotate the lower hooks around a pivot pin, to move the lower hooks between a retracted position and the extended position.

Another example (e.g., example 2) relates to a previous example (e.g., example 1) or to any other example, further comprising that the upper hooks and/or the lower hooks are shaped to be hooked to cylindrical studs (7a, 7b) of the vehicle-side mounting structure.

Another example (e.g., example 3) relates to a previous example (e.g., one of the examples 1 or 2) or to any other example, further comprising that the locking mechanism comprises at least one self-locking bolt (8) configured to impede movement of the at least one hydraulic cylinder and/or the lower hooks while in a locked position.

Another example (e.g., example 4) relates to a previous example (e.g., example 3) or to any other example, further comprising that the one or more self-locking bolts are configured to automatically engage in the locked position upon the lower hooks reaching the extended position.

Another example (e.g., example 5) relates to a previous example (e.g., one of the examples 1 to 4) or to any other example, further comprising that the locking mechanism comprises at least one sensor for determining a position of the lower hooks.

Another example (e.g., example 6) relates to a previous example (e.g., example 5) or to any other example, further comprising that the at least one sensor is configured to determine a position of at least one bolt being configured to impede movement of the at least one hydraulic cylinder and/or the lower hooks while in a locked position.

Another example (e.g., example 7) relates to a previous example (e.g., one of the examples 1 to 6) or to any other example, further comprising that the locking mechanism comprises at least one load holding valve being hydraulically connected to the at least one hydraulic cylinder.

Another example (e.g., example 8) relates to a previous example (e.g., one of the examples 1 to 7) or to any other example, further comprising that the rear demountable console comprises a trailer hitch (9) arranged at the carrier structure.

Another example (e.g., example 9) relates to a previous example (e.g., one of the examples 1 to 8) or to any other example, further comprising that the rear demountable console comprises an underride protection structure (10) arranged at the carrier structure.

An example (e.g., example 10) relates to a vehicle-side mounting structure (4) for mounting a rear demountable console to a vehicle, the vehicle-side mounting structure comprising Receptacles (7a, 7b) for receiving static upper hooks and hydraulically movable lower hooks of a locking mechanism of a console-side mounting structure of the rear demountable console, and a fastening structure (11) for fastening the vehicle-side mounting structure to a frame of the vehicle.

Another example (e.g., example 11) relates to a previous example (e.g., example 10) or to any other example, further comprising that the receptacles (7a, 7b) are cylindrical studs.

Another example (e.g., example 12) relates to a previous example (e.g., one of the examples 10 or 11) or to any other example, further comprising that the vehicle-side mounting structure comprises a first partial mounting structure (4a) to be fastened to a first lateral side of the frame of the vehicle and a second partial mounting structure (4b) to be fastened to a second lateral side of the frame of the vehicle being opposite the first lateral side of the vehicle.

Another example (e.g., example 13) relates to a previous example (e.g., example 12) or to any other example, further comprising that the partial mounting structures are arranged to be fastened laterally to respective sides of the frame of the vehicle.

Another example (e.g., example 14) relates to a previous example (e.g., one of the examples 12 or 13) or to any other example, further comprising that the partial mounting structures comprises a first portion (13) having a lateral extent being larger than a vertical extent of the first portion and a second portion (14) having a lateral extent being smaller than a vertical extent of the second portion.

Another example (e.g., example 15) relates to a previous example (e.g., one of the examples 10 to 14) or to any other example, further comprising that the fastening structure has a lateral width of at least 80 cm.

Another example (e.g., example 16) relates to a previous example (e.g., one of the examples 10 to 15) or to any other example, further comprising that the fastening structure comprises a recess (15) for accommodating a tipping mechanism of the vehicle.

Another example (e.g., example 17) relates to a system comprising the rear demountable console according to one of the examples 1 to 9 and the vehicle-side mounting structure according to one of the examples 10 to 16 and/or a lifting device (20) mounted on the rear demountable console.

Another example (e.g., example 18) relates to a system comprising the rear demountable console according to one of the examples 1 to 9 and a lifting device mounted on the rear demountable console.

Another example (e.g., example 19) relates to a previous example (e.g., example 18) or to any other example, further comprising two or more hydraulic support legs, configured to raise and lower the rear demountable console during coupling of the rear demountable console to the vehicle-side mounting structure.

An example (e.g., example 20) relates to a method for coupling a rear demountable console to a vehicle, comprising arranging (910) a console-side mounting structure of the rear demountable console proximate to a vehicle-side mounting structure fastened to the vehicle, such that static upper hooks of the console-side mounting structure are located above upper receptacles of the vehicle-side mounting structure, lowering (930) the static upper hooks of the console-side mounting structure onto the upper receptacles, rotating (940), using at least one hydraulic cylinder, lower hooks of the console-side mounting structure into an extended position, such that the lower hooks clamp, from below, to lower receptacles of the vehicle-side mounting structure.

Another example (e.g., example 21) relates to a previous example (e.g., example 20) or to any other example, further comprising engaging, by at least one self-locking bolt, into a locked position impeding movement of the at least one hydraulic cylinder and/or the lower hooks when the lower hooks are in the extended position.

Another example (e.g., example 22) relates to a previous example (e.g., one of the examples 20 or 21) or to any other example, further comprising that the method comprises connecting (920) a console-side hydraulic system to a hydraulic system of the vehicle, wherein the act of rotating, using the at least one hydraulic cylinder, the lower hooks of the console-side mounting structure into the extended position is performed using a hydraulic force that is powered by the hydraulic system of the vehicle.

Another example (e.g., example 23) relates to a previous example (e.g., example 22) or to any other example, further comprising that the act of lowering the console-side mounting structure onto the upper receptacles is performed using hydraulic support legs of the rear demountable console or of a lifting device mounted on the rear demountable console, with the hydraulic support legs being powered by the hydraulic system of the vehicle.

Another example (e.g., example 24) relates to a previous example (e.g., one of the examples 20 to 23) or to any other example, further comprising that the method comprises at least one of connecting (920) a console-side electrical system to an electrical system of the vehicle and connecting (920) console-side control circuitry to a control system of the vehicle.

Another example (e.g., example 25) relates to a previous example (e.g., example 24) or to any other example, further comprising that the console-side electrical system is configured to provide electrical power for a lifting device mounted on the rear demountable console.

Another example (e.g., example 26) relates to a previous example (e.g., one of the examples 24 or 25) or to any other example, further comprising that the control circuitry is configured to control operation of the at least one hydraulic cylinder, and/or wherein the control circuitry is configured to interface with a lifting device mounted on the rear demountable console.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### Reference Numerals

- 1: Rear demountable console
- 2: Carrier structure
- 3: Console-side mounting structure
- 4: Vehicle-side mounting structure
- 4a, 4b: Partial mounting structure
- 5: Locking mechanism
- 6a: Static upper hooks
- 6b: Movable lower hooks
- 6c: Pivot pin
- 7a: Upper receptacles
- 7b: Lower receptacles
- 8: Self-locking bolt
- 9: Hitch
- 10: Underride protection structure
- 11: Hydraulic cylinder
- 12: Fastening structure
- 13: First portion of fastening structure
- 14: Second portion of fastening structure
- 15: Recess
- 16: Underride protection structure
- 17a-c: Interface
- 18: Upper portion of truck subframe
- 19: Lower portion of truck subframe
- 20: Crane
- 21: Hydraulic support leg
- 910: Arranging console-side mounting structure proximate to vehicle-side mounting structure
- 920: Connecting hydraulic/electric/control system
- 930: Lowering static hooks onto upper receptacles
- 940: Rotating lower hooks of console-side mounting structure to clamp lower hooks from below to lower receptacles
- 950: Rotating lower hooks of console-side mounting structure to unclamp lower hooks from lower receptacles
- 960: Raising static hooks from upper receptacles
- 970: Disconnecting hydraulic/electric/control system
- 1010: Electrical side of truck
- 1011: Crane control interface
- 1012: Electric truck control device
- 1013, 1014, 1015: Interfaces (plags)
- 1020: Electrical side console
- 1021: Distribution box
- 1022: Sensor 1 transport lock
- 1023: Sensor 2 transport lock
- 1024: Truck interface crane (crane junction box)
- 1025: Rear lighting
- 1026: Control panel on bracket/console with control light
- 1027, 1028: Interfaces (plugs)
- 1030: Electrical side trailer
- 1031: EBS system trailer
- 1032: Rear lighting trailer
- 1040: Mechanical/hydraulic side truck
- 1041: Pump
- 1042: LS filter
- 1043: Tank
- 1044: Hydraulic interface (multi)
- 1050: Mechanical/hydraulic side console
- 1051a,b: Lock cylinder
- 1052a, b: Load-holding valve
- 1053: Control valve bracket (4/3-way, magnetically controlled)
- 1054: Stabilizer valve
- 1055: Control valve crane
- 1056: Crane
- 1057a: Hydraulic interface park position
- 1057b: Load-holding valve, pre-charged (5-8 bar)
- 1057c: Compensation tank
- 1058: Underride protection
- 1059: Trailer hitch
- 1060: Mechanical/hydraulic side trailer
- 1070: Pneumatic side truck
- 1071: Pneumatic interface
- 1080: Pneumatic side console
- 1081: Pneumatic plugs trailer
- 1090: Pneumatic side trailer

## Claims

1. A rear demountable console (1) for mounting a lifting device to a vehicle, the rear demountable console comprising:
a carrier structure (2) for mounting a lifting device; and
a console-side mounting structure (3) for mounting the rear demountable console to a vehicle-side mounting structure (4) fastened to the vehicle,
wherein the console-side mounting structure is arranged at the carrier structure and comprises a locking mechanism (5) with two static upper hooks (6a) and two movable lower hooks (6b), wherein the upper hooks are arranged to be hooked to upper receptacles (7a) of the vehicle-side mounting structure and the lower hooks are arranged to be hooked, in an extended position, to lower receptacles (7b) of the vehicle-side mounting structure,
wherein the locking mechanism comprises at least one hydraulic cylinder (11) configured to rotate the lower hooks around a pivot pin, to move the lower hooks between a retracted position and the extended position.

2. The rear demountable console according to claim 1, wherein the upper hooks and/or the lower hooks are shaped to be hooked to cylindrical studs (7a, 7b) of the vehicle-side mounting structure.

3. The rear demountable console according to one of the claims 1 or 2, wherein the locking mechanism comprises at least one self-locking bolt (8) configured to impede movement of the at least one hydraulic cylinder and/or the lower hooks while in a locked position.

4. The rear demountable console according to claim 3, wherein the one or more self-locking bolts are configured to automatically engage in the locked position upon the lower hooks reaching the extended position.

5. The rear demountable console according to one of the claims 1 to 4, wherein the locking mechanism comprises at least one sensor for determining a position of the lower hooks.

6. The rear demountable console according to claim 5, wherein the at least one sensor is configured to determine a position of at least one bolt being configured to impede movement of the at least one hydraulic cylinder and/or the lower hooks while in a locked position.

7. The rear demountable console according to one of the claims 1 to 6, wherein the locking mechanism comprises at least one load holding valve being hydraulically connected to the at least one hydraulic cylinder.

8. The rear demountable console according to one of the claims 1 to 7, wherein the rear demountable console comprises a trailer hitch (9) arranged at the carrier structure and/or an underride protection structure (10) arranged at the carrier structure.

9. A vehicle-side mounting structure (4) for mounting a rear demountable console to a vehicle, the vehicle-side mounting structure comprising:
Receptacles (7a, 7b) for receiving static upper hooks and hydraulically movable lower hooks of a locking mechanism of a console-side mounting structure of the rear demountable console, and
a fastening structure (11) for fastening the vehicle-side mounting structure to a frame of the vehicle.

10. The vehicle-side mounting structure according to claim 9, wherein the vehicle-side mounting structure comprises a first partial mounting structure (4a) to be fastened to a first lateral side of the frame of the vehicle and a second partial mounting structure (4b) to be fastened to a second lateral side of the frame of the vehicle being opposite the first lateral side of the vehicle, wherein the partial mounting structures are arranged to be fastened laterally to respective sides of the frame of the vehicle.

11. The vehicle-side mounting structure according to claim 10, wherein the partial mounting structures comprises a first portion (13) having a lateral extent being larger than a vertical extent of the first portion and a second portion (14) having a lateral extent being smaller than a vertical extent of the second portion.

12. The vehicle-side mounting structure according to one of the claims 9 to 11, wherein the fastening structure comprises a recess (15) for accommodating a tipping mechanism of the vehicle.

13. A system comprising the rear demountable console according to one of the claims 1 to 8 and the vehicle-side mounting structure according to one of the claims 9 to 12 and/or a lifting device (20) mounted on the rear demountable console.

14. A method for coupling a rear demountable console to a vehicle, comprising:
arranging (910) a console-side mounting structure of the rear demountable console proximate to a vehicle-side mounting structure fastened to the vehicle, such that static upper hooks of the console-side mounting structure are located above upper receptacles of the vehicle-side mounting structure;
lowering (930) the static upper hooks of the console-side mounting structure onto the upper receptacles;
rotating (940), using at least one hydraulic cylinder, lower hooks of the console-side mounting structure into an extended position, such that the lower hooks clamp, from below, to lower receptacles of the vehicle-side mounting structure.

15. The method according to claim 14, further comprising engaging, by at least one self-locking bolt, into a locked position impeding movement of the at least one hydraulic cylinder and/or the lower hooks when the lower hooks are in the extended position.

## Amended claims

### Amended claims in accordance with Rule 137(2) EPC.

1. A rear demountable console (1) for mounting a lifting device to a vehicle, the rear demountable console comprising:
a carrier structure (2) for mounting a lifting device; and
a console-side mounting structure (3) for mounting the rear demountable console to a vehicle-side mounting structure (4) fastened to the vehicle,
wherein the console-side mounting structure is arranged at the carrier structure and comprises a locking mechanism (5) with two static upper hooks (6a) and two movable lower hooks (6b), wherein the upper hooks are arranged to be hooked to upper receptacles (7a) of the vehicle-side mounting structure and the lower hooks are arranged to be hooked, in an extended position, to lower receptacles (7b) of the vehicle-side mounting structure,
wherein the locking mechanism comprises at least one hydraulic cylinder (11) configured to rotate the lower hooks around a pivot pin, to move the lower hooks between a retracted position and the extended position.

2. The rear demountable console according to claim 1, wherein the upper hooks and/or the lower hooks are shaped to be hooked to cylindrical studs (7a, 7b) of the vehicle-side mounting structure.

3. The rear demountable console according to one of the claims 1 or 2, wherein the locking mechanism comprises at least one self-locking bolt (8) configured to impede movement of the at least one hydraulic cylinder and/or the lower hooks while in a locked position.

4. The rear demountable console according to claim 3, wherein the one or more self-locking bolts are configured to automatically engage in the locked position upon the lower hooks reaching the extended position.

5. The rear demountable console according to one of the claims 1 to 4, wherein the locking mechanism comprises at least one sensor for determining a position of the lower hooks.

6. The rear demountable console according to claim 5, wherein the at least one sensor is configured to determine a position of at least one bolt being configured to impede movement of the at least one hydraulic cylinder and/or the lower hooks while in a locked position.

7. The rear demountable console according to one of the claims 1 to 6, wherein the locking mechanism comprises at least one load holding valve being hydraulically connected to the at least one hydraulic cylinder.

8. The rear demountable console according to one of the claims 1 to 7, wherein the rear demountable console comprises a trailer hitch (9) arranged at the carrier structure and/or an underride protection structure (10) arranged at the carrier structure.

9. A system comprising the rear demountable console according to one of the claims 1 to 8 and a vehicle-side mounting structure (4) for mounting a rear demountable console to a vehicle, the vehicle-side mounting structure comprising:
Receptacles (7a, 7b) for receiving static upper hooks and hydraulically movable lower hooks of a locking mechanism of a console-side mounting structure of the rear demountable console, and
a fastening structure (11) for fastening the vehicle-side mounting structure to a frame of the vehicle.

10. The system according to claim 9, wherein the vehicle-side mounting structure comprises a first partial mounting structure (4a) to be fastened to a first lateral side of the frame of the vehicle and a second partial mounting structure (4b) to be fastened to a second lateral side of the frame of the vehicle being opposite the first lateral side of the vehicle, wherein the partial mounting structures are arranged to be fastened laterally to respective sides of the frame of the vehicle.

11. The system according to claim 10, wherein the partial mounting structures comprises a first portion (13) having a lateral extent being larger than a vertical extent of the first portion and a second portion (14) having a lateral extent being smaller than a vertical extent of the second portion.

12. The system according to one of the claims 9 to 11, wherein the fastening structure comprises a recess (15) for accommodating a tipping mechanism of the vehicle.

13. The system according to one of the claims 9 to 12, comprising a lifting device (20) mounted on the rear demountable console.

14. A method for coupling a rear demountable console to a vehicle, comprising:
arranging (910) a console-side mounting structure of the rear demountable console proximate to a vehicle-side mounting structure fastened to the vehicle, such that static upper hooks of the console-side mounting structure are located above upper receptacles of the vehicle-side mounting structure;
lowering (930) the static upper hooks of the console-side mounting structure onto the upper receptacles;
rotating (940), using at least one hydraulic cylinder, lower hooks of the console-side mounting structure into an extended position, such that the lower hooks clamp, from below, to lower receptacles of the vehicle-side mounting structure.

15. The method according to claim 14, further comprising engaging, by at least one self-locking bolt, into a locked position impeding movement of the at least one hydraulic cylinder and/or the lower hooks when the lower hooks are in the extended position.
